# EUROPÄISCHE PATENTSCHRIFT

(11) **EP 2 548 634 B1**
(45) Veröffentlichungstag und Bekanntmachung des Hinweises auf die Patenterteilung: **06.08.2014**
(21) Anmeldenummer: 12170834.1
(22) Anmeldetag: 05.06.2012
(51) Int. Cl.: B01F 5/06, B01F 15/00

(54) **Mischelement für einen statischen Mischer**
Mixing element for static mixer
Elément de mélange pour mélangeur statique

(30) Priorität: 22.07.2011 EP 11175070
(43) Veröffentlichungstag der Anmeldung: 23.01.2013
(73) Patentinhaber: Sulzer Mixpac AG, 9469 Haag (CH)
(72) Erfinder: Linne, Volker, 35119 Rosenthal (DE); Habibi-Naini, Sasan Dr., 8486 Rikon (CH)
(74) Vertreter: Manitz, Finsterwald & Partner GbR

(56) Entgegenhaltungen:
- EP-A1- 0 749 776
- EP-A1- 0 815 929
- EP-A2- 2 181 827
- EP-B1- 1 312 409
- WO-A1-2007/110316

## Beschreibung

Die Erfindung betrifft einen statischen Mischer aus Kunststoff umfassend einen Einbaukörper zum Einbau in ein rohrförmiges Mischergehäuse. Dieser Einbaukörper weist eine Längsachse auf, welche in Richtung eines den Einbaukörper einströmenden Fluids ausgerichtet ist, sodass durch den Einbaukörper ein Mischraum aufspannbar ist. Der Mischraum weist in einer Ebene normal zur Längsachse eine Strömungsquerschnittsfläche auf, welche im wesentlichen der Strömungsquerschnittsfläche des rohrförmigen Mischergehäuses entspricht. Der Einbaukörper umfasst ein Wandelement zur Teilung und/oder Umlenkung der Fluidströmung in eine von der Längsachse abweichende Richtung.

Ein derartiger statischer Mischer ist beispielsweise aus der EP 1426099 B1 bekannt. In diesem statischen Mischer werden zwei Komponenten in einem dreiteiligen Mischprozess, in dem die Masse zuerst geteilt, dann ausgebreitet und verdrängt wird, mittels einer Mehrzahl von gleichartigen Mischelementen miteinander vermischt. Abhängig von den physikalischen Eigenschaften der Komponenten muss dieser Mischprozess mehrmals vorgenommen werden. Aus diesem Grund enthält der statische Mischer eine Mehrzahl von Einbaukörpern gleicher Bauart hintereinander angeordnet. Diese Mischer werden insbesondere zur Vermischung von kleinen Mengen der Komponenten, das heisst wenige Milliliter bis ca. 1000 Milliliter verwendet. Demzufolge haben diese Mischer einen Mischraum mit einem Durchmesser von weniger als 16 mm bei einer Länge von über 50 mm. Dies hat zur Folge, dass die Wandstärken der Wandelemente dieses Mischers weniger als 1 mm betragen können, oft sogar weniger als 0,5 mm.

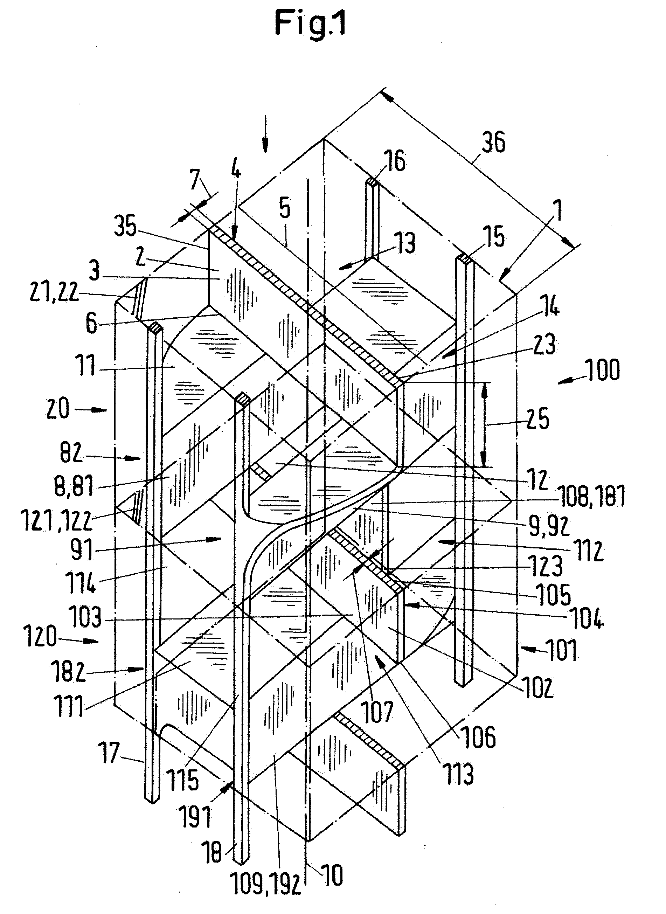

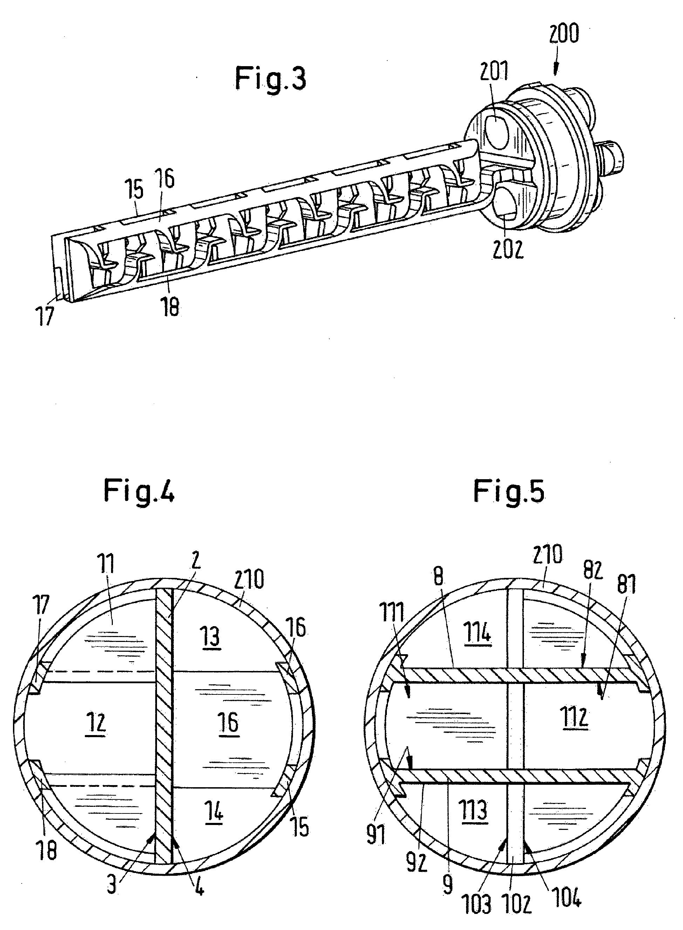

Ein derartiger statischer Mischer gemäss EP 1426099 B1 aus Kunststoff wird vorzugsweise im Spritzgiessverfahren hergestellt. Die Herstellung eines Mischers von 30 mm Länge bei einer Wandstärke von kleiner 3 mm mit Hilfe des Spritzgiessverfahrens wie in Fig. 1 dieses Patents gezeigt, war bisher nicht möglich, da der Fliessweg vom Einspritzpunkt des Spritzgiesswerkzeugs bis zum gegenüberliegenden Ende des Mischers zu hohe Werkzeuginnendrücke erfordern würde. Um einen statischen Mischer mit derart geringen Wandstärken wirtschaftlich im Spritzgiessverfahren herstellen zu können, wird jeder Einbaukörper mit dem benachbarten Einbaukörper über Stegelemente verbunden. Diese Stegelemente ermöglichen es der Polymerschmelze im Spritzgiesswerkzeug, von einem Einbaukörper zu einem benachbarten Einbaukörper zu gelangen und die Werkzeuginnendrücke unter 1000 bar zu halten, sodass ein Versagen des Spritzgiesswerkzeugs verhindert werden kann, wie es in einer Anordnung von zwei Einbaukörpern gemäss Fig. 4 der EP 2 181 827 A1 gezeigt ist, welche in ihrer Anordnung von Wandelementen und Umlenkelementen dem Ausführungsbeispiel gemäss Fig. 15 oder 17 der EP 1426099 B1 entspricht. Als wesentlicher Unterschied zu der EP 1426099 B1 dienen die Stegelemente der EP 2 181 827 A1 nur der Verbindung von einem Einbaukörper zu einem benachbarten Einbaukörper. Hingegen können die Stegelemente gemäss Fig. 15 der EP1426099 B1 sich über mehrere Einbaukörper erstrecken. Die Stegelemente beanspruchen Mischraum und wurden daher nach der bisherigen Lehre möglichst vermieden, bzw. derart ausgestaltet, dass sie nur einen Teil der Einbaukörper des Mischers miteinander verbinden, gemäss

Fig. 15 der EP 1426099 B1 maximal 5 Einbaukörper. Durch das Verfahren gemäss EP 2 181 827 wurde es erst möglich, Stegelemente vorzusehen, die jeweils nur zwei benachbarte Einbaukörper miteinander verbinden. Als nachteilig hat sich an dieser Entwicklung jedoch erwiesen, dass die Stabilität des aus den Einbaukörpern aufgebauten Mischelements in Mitleidenschaft gezogen wird. Insbesondere beim Austrag von zähflüssigen Massen hat sich gezeigt, dass das Mischelement zu Bruch gehen kann.

Aufgabe der Erfindung ist es, ein stabileres Mischelement zu schaffen, bei welchem gleichzeitig der Druckverlust in Bezug auf die vorgenannten Lösungen bei gleicher Struktur vermindert ist.

Die Aufgabe der Erfindung wird durch ein Mischelement gelöst, dessen Einbaukörper über ein gemeinsames Stegelement miteinander verbunden sind. Durch das Vorsehen eines Stegelements wird das Mischelement steifer, das heisst, die Beständigkeit gegen Bruch erhöht. Allerdings wurde diese Lösung in der Fachwelt bisher nicht favorisiert, da nach bisherigen Erfahrungen das Vorsehen eines Stegelements zu erhöhtem Druckverlust führen sollte. Diese Annahme wurde für einen Wendelmischer im Vergleich mit einem Mischelement gemäss EP 1426099 B1 bestätigt. Für eine Füllmasse A wurde für einen Wendelmischer die erforderliche Kraft zum Austrag der Füllmasse gemessen, die im Versuch 472 N betragen hat. Für dieselbe Füllmasse wurde für ein Mischelement gemäss EP 1426099 B1 eine Kraft von 540 N gemessen, die also erwartungsgemäss höher liegt, weil die Einbauten dieses Mischelements einen höheren Anteil am Mischraum einnehmen. Daher liegt erwartungsgemäss der Druckverlust des Mischelements gemäss EP 1426099 B1 höher.

Wenn ein Stegelement vorgesehen wird, welches alle Einbaukörper miteinander verbindet, ist somit zu erwarten, dass die Stabilität des Mischelements weiter erhöht wird, allerdings dadurch dass ein noch höherer Anteil an Mischraum durch das Mischelement beansprucht wird, auch der Druckverlust zunimmt und somit die Kraft zum Austrag der Füllmasse zunimmt. Überraschenderweise hat der Versuch jedoch eine Kraft 493 N geliefert. Dieser Wert liegt zwischen dem Wert für den Wendelmischer und dem Wert für das Mischelement gemäss EP 1426099 B1.

Dieser Versuch wurde für eine Füllmasse B wiederholt. Für den Wendelmischer hat die Kraft bei Verwendung von Füllmasse B 410 N betragen, für das Mischelement gemäss EP 1426099 B1 461 N und für das erfindungsgemässe Mischelement 443 N.

Füllmasse A wird unter dem Handelsnamen Voco registrado X-tra vertrieben, Füllmasse B wird unter dem Handelsnamen Kettenbach Monopren vertrieben.

Die Versuchsergebnisse zeigen, dass der überraschende Effekt unabhängig von der eingesetzten Füllmasse erreicht wird, somit also der Struktur des Mischelements inhärent ist.

Im Versuch hat sich auch gezeigt, dass die Homogenität der Mischung für ein Mischelement gemäss der Erfindung bei gleicher Mischerlänge verbessert ist gegenüber dem Stand der Technik. Insbesondere kann durch den geringeren Druckverlust der Mischer eine grössere Länge aufweisen. Die maximale Kraft, die manuell aufgewendet werden kann, um die Füllmasse durch das Mischelement zu drücken, ist begrenzt. Hieraus folgt, dass ein Mischelement, welches einen verringerten Druckverlust aufweist, bei gleicher Baulänge einfacher zu handhaben ist. Des weiteren kann das erfindungsgemässe Mischelement gegenüber einem Mischelement aus dem Stand der Technik mit Einbaukörpern, die einen grösseren Druckverlust aufweisen, verlängert werden. Das heisst, das Mischelement kann mehr Einbaukörper enthalten, als beispielsweise das aus der EP 2 181 827 A1 vorbekannte Mischelement, womit die Mischgüte verbessert werden kann.

Das Mischelement ist für einen statischen Mischer zum Einbau in ein rohrförmiges Mischergehäuse vorgesehen. Das Mischelement weist eine Längsachse auf, entlang derer eine Mehrzahl von Einbaukörpern hintereinander angeordnet sind, wobei ein erster Einbaukörper ein erstes Wandelement aufweist, welches sich in Richtung der Längsachse erstreckt Das Wandelement hat eine erste Seitenwand und eine zweite Seitenwand, die der ersten Seitenwand gegenüberliegend angeordnet ist. Ein Umlenkelement ist angrenzend an das erste Wandelement angeordnet und weist eine sich in Querrichtung zum Wandelement beidseitig des Wandelements erstreckende Umlenkoberfläche auf, wobei eine erste Öffnung in der Umlenkoberfläche an Seite, die der ersten Seitenwand des Wandelements zugewendet ist, vorgesehen ist.

Angrenzend an die erste Öffnung sind ein zweites und ein drittes Wandelement angeordnet, wobei die zweiten und dritten Wandelemente sich in Richtung der Längsachse erstrecken und je eine Innenwand und eine Aussenwand aufweisen, welche sich im wesentlichen in Richtung der Längsachse erstrecken. Jede der Innenwände und Aussenwände schliessen einen Winkel zwischen 20° und 160° zu der ersten oder zweiten Seitenwand des ersten Wandelements ein. Die erste Öffnung ist zwischen den Innenwänden der zweiten und dritten Wandelemente angeordnet und eine zweite Öffnung ist ausserhalb einer der Aussenwände des zweiten oder dritten Wandelements angeordnet, wobei die zweite Öffnung in der Umlenkoberfläche an der Seite, die der zweiten Seitenwand des ersten Wandelements zugewendet ist, vorgesehen ist.

Angrenzend an die erste Öffnung sind somit ein zweites und ein drittes Wandelement in Richtung der Längsachse gegenüberliegend zum ersten Wandelement angeordnet, wobei das zweite und dritte Wandelement einen von der ersten Öffnung ausgehenden, sich in Richtung der Längsachse erstreckenden Kanal begrenzen. Eine zweite Öffnung ist in der Umlenkoberfläche an der Seite, die der zweiten Seitenwand des Wandelements zugewendet ist, vorgesehen, wobei an die zweite Öffnung das zweite oder das dritte Wandelement anschliessen. Ferner schliesst an das zweite und dritte Wandelement das erste Wandelement des zweiten Einbaukörpers an. Mehr als fünf Einbaukörper sind über ein gemeinsames Stegelement miteinander verbunden.

Insbesondere kann auch der zweite Einbaukörper ein erstes Wandelement aufweisen, welches sich in Richtung der Längsachse erstreckt und eine erste Seitenwand und eine zweite Seitenwand aufweisen, die der ersten Seitenwand gegenüberliegend angeordnet ist. Ein Umlenkelement kann angrenzend an das erste Wandelement angeordnet sein und das Umlenkelement eine sich in Querrichtung zum Wandelement beidseitig des Wandelements erstreckende Umlenkoberfläche aufweisen, wobei eine erste Öffnung in der Umlenkoberfläche an der Seite, die der ersten Seitenwand des Wandelements zugewendet ist, vorgesehen sein kann.

Angrenzend an die erste Öffnung kann wiederum ein zweites und ein drittes Wandelement angeordnet sein, wobei die zweiten und dritten Wandelemente sich in Richtung der Längsachse erstrecken und je eine Innenwand und eine Aussenwand aufweisen, welche sich im wesentlichen in Richtung der Längsachse erstrecken. Jede der Innenwände und Aussenwände können einen Winkel zwischen 20° und 160° zu der ersten oder zweiten Seitenwand des ersten Wandelements einschliessen. Die erste Öffnung kann zwischen den Innenwänden der zweiten und dritten Wandelemente angeordnet sein und eine zweite Öffnung kann ausserhalb einer der Aussenwände des zweiten oder dritten Wandelements angeordnet sein, wobei die zweite Öffnung in der Umlenkoberfläche an der Seite, die der zweiten Seitenwand des ersten Wandelements zugewendet ist, vorgesehen sein kann.

Das heisst, dass angrenzend an die erste Öffnung ein zweites und ein drittes Wandelement in Richtung der Längsachse gegenüberliegend zum ersten Wandelement angeordnet sein können, wobei das zweite und dritte Wandelement einen von der ersten Öffnung ausgehenden, sich in Richtung der Längsachse erstreckenden Kanal begrenzen können. Eine zweite Öffnung kann in der Umlenkoberfläche an der Seite, die der zweiten Seitenwand des Wandelements zugewendet ist, vorgesehen sein, wobei an die zweite Öffnung das zweite oder das dritte Wandelement anschliessen können, wobei der aus dem ersten Wandelement, dem Umlenkelement sowie dem zweiten und dritten Wandelement bestehende zweite Einbaukörper um die Längsachse um einen Winkel von 10° bis zu und einschliesslich 180° in Bezug auf den ersten Einbaukörper verdreht angeordnet sein kann.

Insbesondere kann der zweite Einbaukörper den gleichen Aufbau haben, wie der erste Einbaukörper. Der erste Einbaukörper kann um die Längsachse um einem Winkel von 180° in Bezug auf den zweiten Einbaukörper verdreht angeordnet sein.

Insbesondere können alle Einbaukörper des Mischelements mittels eines Stegelements verbunden sein. Das Stegelement kann am äusseren Umfang des Umlenkelements angeordnet sein. An jeder Seite des Wandelements kann ein Stegelement vorgesehen sein, aber auch eine Mehrzahl von Stegelementen kann vorgesehen sein, insbesondere können an jeder Seite des Wandelements je zwei Stegelemente vorgesehen sein.

Das Wandelement kann einen Winkel von 90 bis 130° mit der Umlenkoberfläche einschliessen.

Die Umlenkoberfläche kann eine zumindest teilweise in Richtung des strömenden Fluids gekrümmte Oberfläche zur Umlenkung der Fluidströmung in eine von der Längsachse abweichende Richtung aufweisen, insbesondere kann eine progressive Krümmung in Strömungsrichtung und in Richtung des Mischergehäuses vorgesehen sein.

Nach einem alternativen Ausführungsbeispiel kann die Umlenkoberfläche im wesentlichen eben sein. Die Umlenkoberfläche kann sich insbesondere im wesentlichen in einem Winkel von 90° zum Wandelement erstrecken.

Die Umlenkoberfläche des ersten Einbaukörpers ist insbesondere derart ausgestaltet, dass sie in Richtung der Längsachse die Öffnungen des zweiten Einbaukörpers verdeckt.

Nach einem weiteren Ausführungsbeispiel kann die Oberfläche des Umlenkelements an der Seite, die der ersten Seitenwand des Wandelements zugewendet ist, zumindest teilweise in einer Querebene liegen, die in einem Winkel von 60° bis zu 90° zur Längsachse ausgerichtet ist. Des weiteren kann die Oberfläche des Umlenkelements an der Seite, die der zweiten Seitenwand des Wandelements zugewendet ist, in einer Querebene liegen, die in einem Winkel von 60° bis zu 90° zur Längsachse ausgerichtet ist.

Zwischen dem zweiten und dritten Wandelement des ersten Einbaukörpers und dem ersten Wandelement des zweiten Einbaukörpers kann ein Verstärkungselement an deren Verbindungsstelle vorgesehen sein. Durch dieses Verstärkungselement kann der Übergang zwischen dem ersten und zweiten Einbaukörper in seiner Formstabilität und Steifigkeit verbessert werden. Auch der Fliessquerschnitt für die Polymerschmelze wird an einer Verbindungsstelle mit Verstärkungselement erhöht. Das Verstärkungselement kann beispielsweise als eine Verdickung oder eine Rippe ausgebildet sein.

Das statische Mischelement kann insbesondere ein geschäumtes Polymer enthalten. Gegenüber dem konventionellen Spritzgiessverfahren wird in diesem Fall zur Herstellung des statischen Mischers ein treibmittelhaltiges Polymer eingesetzt, welches während oder im unmittelbaren Anschluss an das Einspritzen aufschäumt. Insbesondere umfasst das Spritzgiessverfahren den Schritt des Einspritzens eines treibmittelhaltigen Polymers in ein Spritzgiesswerkzeug bei einem Werkzeuginnendruck von weniger als 600 bar, besonders bevorzugt weniger als 500 bar.

Ein statischer Mischer enthält ein Mischelement nach einem der vorhergehenden Ausführungsbeispiele und ein Mischergehäuse, welches das Mischelement umgibt.

Der Einbaukörper weist eine Längenabmessung und einen Durchmesser auf. Für nicht kreisförmige rohrförmige Mischergehäuse entspricht der Durchmesser der Kantenlänge, wenn die Querschnittsfläche des rohrförmigen Mischergehäuses quadratisch ist. Für andere Formen der Mischergehäuse mit beispielsweise rechteckigen oder ovalen Querschnitten wird ein äquivalenter Durchmesser Dₐ unter der Annahme bestimmt, dass die Querschnittsfläche kreisförmig wäre, das heisst unter Verwendung der Formel Dₐ =2*(A/π)^{1/2}. Dₐ steht dann für den äquivalenten Durchmesser, A für die tatsächliche Querschnittsfläche. Das Verhältnis von Längenabmessung zu Durchmesser ist mindestens 1, wobei als Durchmesser entweder der Durchmesser des kreisförmigen Querschnitts oder der äquivalente Durchmesser für nicht-kreisförmige Querschnitte einzusetzen ist.

Die Längenabmessung ist die Ausdehnung des Einbaukörpers in Richtung der Längsachse. Das Verhältnis von Längenabmessung zu Durchmesser kann insbesondere grösser als 1 sein.

Insbesondere können eine Mehrzahl von Einbaukörpern hintereinander entlang der Längsachse angeordnet sein. Diese Einbaukörper können entweder gleiche Bauweise aufweisen oder Einbaukörper unterschiedlicher Bauweise können miteinander kombiniert werden, sodass eine Mischeranordnung, wie sie beispielsweise in der EP 1312409 B1 gezeigt ist, entsteht. Die benachbarten Einbaukörper sind zumindest über die Stegelemente miteinander verbunden, sodass das Mischelement, das aus dieser Mehrzahl von Einbaukörpern aufgebaut ist, als ein monolithisches Teil ausgebildet ist. Das heisst, das Mischelement wird in seiner Gesamtheit in einem einzigen Spritzgiesswerkzeug hergestellt.

Der Einbaukörper oder die Gesamtheit der Einbaukörper können eine Längenabmessung zwischen 5 und 500 mm, vorzugsweise zwischen 5 und 300 mm, bevorzugt zwischen 50 und 100 mm aufweisen.

Der statische Mischer enthält ein Mischelement nach einem der vorhergehenden Ausführungsbeispiele und ein Mischergehäuse, welches das Mischelement umgibt. Das Mischelement weist eine Längsachse auf, die im zusammengebauten Zustand mit der Längsachse des Mischergehäuses zusammenfällt. Daher weist auch jeder der Einbaukörper diese Längsachse auf. Die Längsachse ist in Richtung eines in den statischen Mischer einströmenden Fluids ausgerichtet. Das Fluid umfasst zumindest zwei Komponenten, die über ein stromaufwärts des Mischelements angeordnetes Einlasselement zugeführt werden.

Mittels des Umlenkelements wird die Strömung des zu mischenden Fluids im Inneren des Mischraums umgelenkt, sodass die Komponenten, die als Stränge in das rohrförmige Mischergehäuse mit eingebautem Mischelement eintreten, während ihres Wegs durch den statischen Mischer fortwährend in Streifen von sich verringernder Breite unterteilt werden, wodurch sich auch schwer mischbare oder hochviskose Komponenten mit diesem statischen Mischer verarbeiten lassen.

Das zu mischende Fluid umfasst in der Regel zwei verschiedene Komponenten. In den meisten Fällen liegen die Komponenten in flüssigem Zustand oder als zähflüssige Massen vor. Hierzu zählen beispielsweise Pasten, Klebstoffe, aber auch Fluide, welche Einsatz im medizinischen Bereich finden, welche pharmazeutische Wirkstoffe enthalten, oder Fluide für kosmetische Anwendungen, sowie Lebensmittel. Insbesondere finden derartige statische Mischer auch Verwendung als Einwegmischer zur Mischung eines aushärtenden Mischguts aus fliessfähigen Komponenten, wie beispielsweise die Mischung von Mehrkomponentenklebstoffen. Eine andere bevorzugte Verwendung liegt in der Mischung von Abformmassen im Dentalbereich.

Die vorgängig beschriebenen statischen Mischer eignen sich als Einwegmischer, da ihre Herstellungs- und Materialkosten gering sind, sobald das entsprechende Spritzgiesswerkzeug hergestellt ist. Des weiteren kommen die statischen Mischer in Dosier- und/oder Mischgeräten zum Einsatz. Der statische Mischer kann an ein Austraggerät oder eine Austragkartusche, insbesondere eine Mehrkomponentenkartusche angebracht werden. Als Beispiel sei insbesondere eine Mehrkomponentenkartusche genannt, die eine Austragsvorrichtung und ein an die Austragsvorrichtung gekoppeltes Rohr umfasst, welches einen statischen Mischer gemäss eines der vorhergehenden Ausführungsbeispiele enthält.

Nachfolgend wird die Erfindung anhand der Zeichnungen erläutert. Es zeigen:
- Fig. 1: ein Ausführungsbeispiel eines Ausschnitts eines Mischelements nach einem ersten Ausführungsbeispiel der Erfindung
- Fig. 2: ein Ausführungsbeispiel eines Ausschnitts eines Mischelements nach einem zweiten Ausführungsbeispiel der Erfindung
- Fig. 3: eine Ansicht eines Mischelements mit Einbaukörpern gemäss Fig. 2.
- Fig. 4: einen Schnitt durch einen Einbaukörper gemäss Fig. 2
- Fig. 5: einen Schnitt durch einen Einbaukörper, der benachbart zum Einbaukörper gemäss Fig. 4 angeordnet ist.
- Fig. 6: einen Schnitt durch ein Einlassteil eines statischen Mischers und Mischelement gemäss Fig.3

In Fig. 1 ist ein Ausführungsbeispiel eines Mischelements 100 für einen statischen Mischer nach einem ersten Ausführungsbeispiel der Erfindung dargestellt. Das Mischelement umfasst einen Einbaukörper 1, der in ein rohrförmiges Gehäuse, welches nicht dargestellt ist, eingebaut ist. Das rohrförmige Gehäuse dient als Begrenzung eines Mischraums 20, der sich im Inneren des rohrförmigen Gehäuses befindet. Durch den Mischraum 20 strömt ein zu mischendes Fluid, welches in der Regel aus zumindest zwei verschiedenen Komponenten besteht. In den meisten Fällen liegen die Komponenten in flüssigem Zustand oder als zähflüssige Massen vor. Hierzu zählen beispielsweise Pasten, Klebstoffe, aber auch Fluide, welche Einsatz im medizinischen Bereich finden, welche pharmazeutische Wirkstoffe enthalten, oder Fluide für kosmetische Anwendungen, sowie Lebensmittel. Insbesondere finden derartige statische Mischer auch Verwendung als Einwegmischer zur Mischung eines aushärtenden Mischguts aus fliessfähigen Komponenten, wie beispielsweise die Mischung von Mehrkomponentenklebstoffen. Eine andere bevorzugte Verwendung liegt in der Mischung von Abformmassen im Dentalbereich.

Das Mischelement gemäss Fig. 1 umfasst somit einen Einbaukörper 1 zum Einbau in ein rohrförmiges Mischergehäuse, wobei der Einbaukörper 1, 101 eine Längsachse 10 aufweist, welche in Richtung eines den Einbaukörper 1 einströmenden Fluids ausgerichtet ist. Durch den Einbaukörper 1 ist ein Mischraum 20 aufspannbar, der von einem nicht dargestellten Mischergehäuse umfangsseitig begrenzt ist. In der Fig. 1 ist zur Erleichterung der Vorstellung ein würfelförmiger Mischraum angedeutet. Die Seitenflächen des Würfels können die Innenwände des Mischergehäuses darstellen. Das Fluid strömt von der Deckfläche des Würfels, welche eine Strömungsquerschnittsfläche 22 ausbildet, in Richtung des Einbaukörpers 101.

Der Einbaukörper 1 und der Einbaukörper 101 haben dieselbe Struktur, allerdings ist der Einbaukörper 101 um 180° um die Längsachse 10 gedreht. Wie der Mischraum 20 weist der Mischraum 120 in einer normal zur Längsachse 10 angeordneten Ebene 121 eine Strömungsquerschnittsfläche 122 auf, welche im wesentlichen der Strömungsquerschnittsfläche des den Einbaukörper 101 umgebenden rohrförmigen Mischergehäuses entspricht. Für Einbaukörper 1, 101 welche über zumindest eine Symmetrieebene verfügen, die den Mischraum in zwei gleiche Teile teilt, liegt die Längsachse in dieser Symmetrieebene. Der Mischraum wird durch das nicht dargestellte Mischergehäuse begrenzt. In diesem Ausführungsbeispiel soll das Mischelement in ein Mischergehäuse mit rechteckigem oder quadratischen Querschnitt eingebaut werden. Die Innenabmessung des Mischergehäuses, welche für die Ermittlung des äquivalenten Durchmessers verwendet wird, ist mit Bezugslinie 36 angegeben.

Der Einbaukörper 1 enthält zumindest ein erstes Wandelement 2, welches eine Teilung der Fluidströmung in zwei im wesentlichen parallel zur Längsachse 10 strömende Teilströme dient. Das Wandelement 2 hat eine erste Seitenwand 3 und eine zweite Seitenwand 4. Der Schnitt des ersten Wandelements 2 mit der Ebene 21 ergibt eine Querschnittsfläche 23. Diese Querschnittsfläche 23 beträgt maxi mal 1/5 vorzugsweise maxi mal 1/10 besonders bevorzugt maximal 1/20 der Strömungsquerschnittsfläche 22 des Mischraums 20 ohne Einbaukörper. Das Fluid strömt somit beidseitig der Seitenwände 3, 4 des Wandelements 2. Die Strömungsrichtung des Fluids ist durch einen Pfeil angedeutet. Das Wandelement weist einen im wesentlichen rechteckigen Querschnitt auf. Das erste Wandelement 2 hat eine erste Breitseite 5, eine zweite Breitseite 6 sowie eine erste und eine zweite Längsseite 25, 35. Die erste Breitseite 5, die zweite Breitseite 6, die erste Längsseite 25 und die zweite Längsseite 35 bilden den Umfang jeder der Seitenwände 3, 4. Die Längsseiten 25, 35 erstrecken sich im wesentlichen in Richtung der Längsachse 10 und die erste Breitseite 5 und zweite Breitseite 6 verlaufen quer zur Richtung der Längsachse. Das erste Wandelement 2 unterteilt den Mischraum in zwei Teile. Das Wandelement 2 hat die Funktion eines Stegelements, welches die Fluidströmung in zwei Teile teilt, wobei deren Umlenkung mit Ausnahme der Umlenkung an den Kanten der ersten Breitseite 5 vernachlässigbar ist. Die Wandstärke 7 des Wandelements 2 beträgt üblicherweise weniger als 1 mm für ein Mischelement mit einer Gesamtlänge von bis zu 100 mm.

An das erste Wandelement 2 schliesst ein Umlenkelement 11 an, welches der Umlenkung der Teilströme in eine von der Längsachse abweichende Richtung dient. Das Umlenkelement weist eine sich in Querrichtung zum Wandelement 2 beidseitig des Wandelements erstreckende Umlenkoberfläche auf. Eine erste Öffnung 12 ist in der Umlenkoberfläche an Seite, die der ersten Seitenwand 3 des Wandelements 2 zugewendet ist, vorgesehen.

Der Kreuzungswinkel zwischen dem ersten Wandelement 2 und dem zweiten bzw. dritten Wandelement 8, 9 beträgt in dem Ausführungsbeispiel gemäss Fig. 1 90°. Gemäss Fig. 1 ist das erste Wandelement 2 mit dem zweiten Wandelement 8 und dem dritten Wandelement 9 über das Umlenkelement 11 verbunden. Das Umlenkelement 11 liegt bevorzugt in einer Ebene, die parallel zur Ebene 21 ausgerichtet ist oder mit einem Neigungswinkel zu der Ebene angeordnet ist, wobei der Neigungswinkel nicht mehr als 60°, vorzugsweise nicht mehr als 45°, besonders bevorzugt nicht mehr als 30° beträgt. Je geringer der Neigungswinkel zwischen der Oberfläche des Umlenkelements 11 und der Ebene 21, desto geringer ist die benötigte Baulänge. Oder anders ausgedrückt: die Oberfläche des Umlenkelements 11 liegt im wesentlichen in einer Querebene, die in einem Winkel von 45° bis zu 90 °, vorzugsweise von 60 °bis zu 90 ° besonders bevorzugt von 75 ° bis zu 90 ° zur Längsachse 10 ausgerichtet ist.

Die an das Umlenkelement 11 anschliessenden Wandelemente 8, 9 begrenzen einen von der ersten Öffnung 12 ausgehenden, sich in Richtung der Längsachse 10 erstreckenden Kanal. Mit dem Ausdruck "an das Umlenkelement anschliessend" soll gemeint sein, dass das zweite und das dritte Wandelement 8, 9 in Richtung der Längsachse gegenüberliegend zum ersten Wandelement 2 angeordnet sind, das heisst in Strömungsrichtung stromabwärts des ersten Wandelements 2 angeordnet sind.

Eine zweite Öffnung ist in der Umlenkoberfläche an Seite, die der zweiten Seitenwand 4 des Wandelements 2 zugewendet ist, vorgesehen, wobei an die zweite Öffnung das zweite oder das dritte Wandelement 8, 9 anschliessen. Das zweite und dritte Wandelement 8, 9 begrenzt denselben Kanal, der auch von der ersten Öffnung 12 ausgeht.

Angrenzend an die erste Öffnung 12 sind somit ein zweites und ein drittes Wandelement 8, 9 angeordnet. Die zweiten und dritten Wandelemente 8, 9 erstrecken sich in Richtung der Längsachse 10 und weisen je eine Innenwand 81, 91 und eine Aussenwand 82, 92 auf, welche sich im wesentlichen in Richtung der Längsachse 10 erstrecken. Das zweite Wandelement 9 weist die Innenwand 81 und die Aussenwand 82 auf. Das dritte Wandelement weist die Innenwand 91 und die Aussenwand 92 auf. Im vorliegenden Ausführungsbeispiel erstrecken sich die Innenwände 81, 91 und Aussenwände 82, 92 in Richtung der Längsachse, also in Zeichnungsrichtung in vertikaler Richtung. Jede der Innenwände 81, 91 und Aussenwände 82, 92 kann einen Winkel zwischen 20° und 160° zu der ersten oder zweiten Seitenwand 3, 4 des ersten Wandelements 2 einschliessen. Die erste Öffnung 12 ist zwischen den Innenwänden 81, 91 der zweiten und dritten Wandelemente 8, 9 angeordnet. Eine zweite Öffnung 13 und eine optionale dritte Öffnung 14 sind ausserhalb einer der Aussenwände 82, 92 des zweiten oder dritten Wandelements 8, 9 angeordnet. Die zweite Öffnung 13 sowie die dritte Öffnung 14 sind in der Umlenkoberfläche an der Seite, die der zweiten Seitenwand 4 des ersten Wandelements 2 zugewendet ist, vorgesehen. Insbesondere kann die Innenwand jedes Wandelements parallel zu dessen Aussenwand sein. Des weiteren können die zweiten und dritten Wandelemente jeweils zueinander parallele Innenwände 81, 91 sowie Aussenwände 82, 92 aufweisen.

An das zweite und dritte Wandelement 8, 9 schliesst das erste Wandelement 102 des zweiten Einbaukörpers 101 an. Der zweite Einbaukörper 101 weist ein erstes Wandelement 102 auf, welches sich in Richtung der Längsachse 10 des Mischelements erstreckt und eine erste Seitenwand 103 und eine zweite Seitenwand 104 aufweist, die der ersten Seitenwand 103 gegenüberliegend angeordnet ist. Die erste Seitenwand 103 und die zweite Seitenwand 104 sind im wesentlichen parallel zur Längsachse 10 angeordnet.

Ein Umlenkelement 111 ist angrenzend an das erste Wandelement 102 angeordnet. Das Umlenkelement 111 weist eine sich in Querrichtung zum Wandelement 102 beidseitig desselben erstreckende Umlenkoberfläche auf. Eine erste Öffnung 112 ist in der Umlenkoberfläche an der Seite, die der zweiten Seitenwand 104 des Wandelements 102 zugewendet ist, vorgesehen. Angrenzend an die erste Öffnung 112 sind ein zweites und ein drittes Wandelement 108, 109 in Richtung der Längsachse 10 gegenüberliegend zum ersten Wandelement 102. Das heisst, das zweite und dritte Wandelement 108, 109 befinden sich stromabwärts des ersten Wandelements 102. Das zweite und dritte Wandelement 108, 109 begrenzen einen von der ersten Öffnung 112 ausgehenden, sich in Richtung der Längsachse 10 erstreckenden Kanal. Eine zweite Öffnung 113, 114 ist in der Umlenkoberfläche an der Seite, die der ersten Seitenwand 103 des Wandelements 102 zugewendet ist, vorgesehen. An die zweite Öffnung 113, 114 schliessen das zweite oder das dritte Wandelement 108, 109 an.

Angrenzend an die erste Öffnung 112 sind ein zweites Wandelement 108 und ein drittes Wandelement 109 angeordnet. Die zweiten und dritten Wandelemente 108, 109 erstrecken sich in Richtung der Längsachse 10 des Mischelements. Das zweite Wandelement weist eine Innenwand 181 und eine Aussenwand 182 auf und das dritte Wandelement weist eine Innenwand 191 und eine Aussenwand 192 auf. Die Aussenwände 182, 192 und die Innenwände 181, 191 erstrecken sich im wesentlichen in Richtung der Längsachse 10 des Mischelements. Sie sind im vorliegenden Ausführungsbeispiel jeweils parallel zueinander. Jede der Innenwände 181, 191 und Aussenwände 182, 192 schliessen einen Winkel zwischen 20° und 160° zu der ersten oder zweiten Seitenwand 103, 104 des ersten Wandelements 102 ein, im vorliegenden Fall 90°. Die erste Öffnung 112 ist zwischen den Innenwänden 181, 191 der zweiten und dritten Wandelemente 108, 109 angeordnet und zumindest eine zweite Öffnung 113, 114 ist ausserhalb einer der Aussenwände 182, 192 des zweiten oder dritten Wandelements 108, 109 angeordnet. Die zweite Öffnung 113 und/oder eine dritte Öffnung 114 sind in der Umlenkoberfläche an der Seite vorgesehen, die der zweiten Seitenwand 104 des ersten Wandelements 102 zugewendet ist.

Der das erste Wandelement 102, das Umlenkelement 111 sowie das zweite und dritte Wandelement 108, 109 enthaltende zweite Einbaukörper 101 ist um die Längsachse 10 um einen Winkel von 10° bis zu und einschliesslich 180, in dem speziellen Beispiel von 180°, in Bezug auf den ersten Einbaukörper 1 verdreht angeordnet.

Der erste Einbaukörper 1 und der zweite Einbaukörper 101 haben gleichen Aufbau, das heisst sie enthalten dieselben Wandelemente und dieselben Umlenkelemente, die in jeweils gleichen Winkeln und Abständen zueinander angeordnet sind.

Der erste Einbaukörper 1 und der zweite Einbaukörper 101 sind über eine Mehrzahl von gemeinsamen Stegelementen 15, 16, 17, 18 miteinander verbunden.

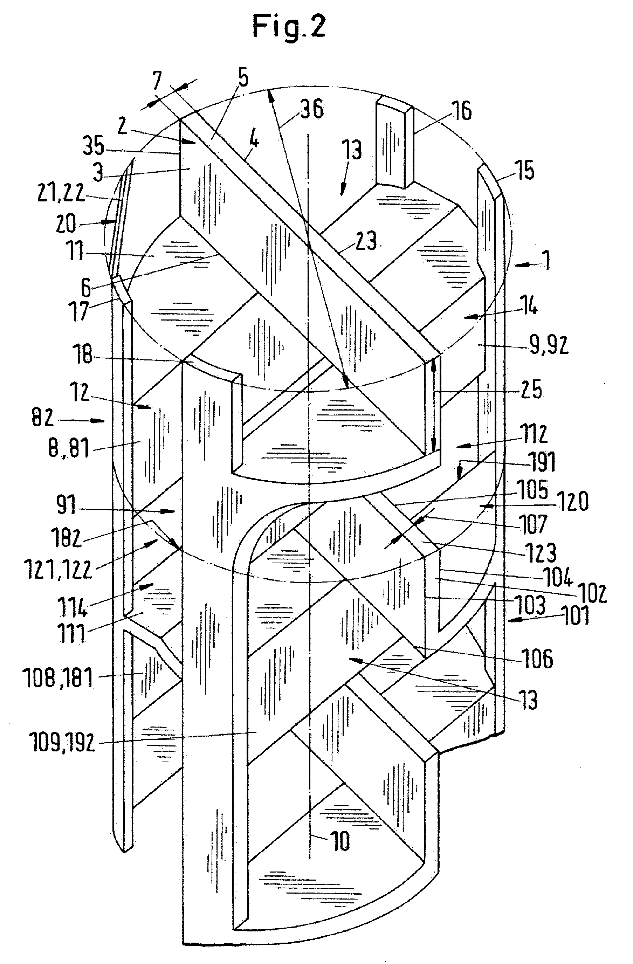

Fig. 2 zeigt ein Ausführungsbeispiel eines Ausschnitts eines Mischelements nach einem zweiten Ausführungsbeispiel der Erfindung. Der Aufbau des Mischelements unterscheidet sich nicht wesentlich vom Mischelement gemäss Fig. 1, daher werden für gleiche Teile dieselben Bezugszeichen verwendet wie in Fig. 1. Nachfolgend soll auch nur auf die Unterschiede zu dem Ausführungsbeispiel gemäss Fig. 1 eingegangen werden. Von dem Mischelement sind wiederum ein erster Einbaukörper 1 und ein zweiter Einbaukörper 101 gezeigt. Die Einbaukörper sind zum Einbau in ein Mischergehäuse bestimmt, welches kreisförmigen oder elliptischen Querschnitt aufweist. Der Querschnittsverlauf der Innenwand des nicht dargestellten Mischergehäuses ist mit einer strichpunktierten Linie angedeutet. Der Durchmesser des Mischergehäuses ist mit einer Bezugslinie 36 dargestellt.

Fig. 3 zeigt eine Ansicht eines ersten Ausführungsbeispiels eines Mischelements gemäss der Erfindung. Das Mischelement enthält Einbaukörper, wie in Fig. 2 dargestellt. Des weiteren enthält das Mischelement ein Einlasselement, welches die Zufuhrkanäle für die zu mischenden Komponenten enthält. Das Mischverhältnis der beiden Komponenten kann gleich 1:1 sein, sich aber auch unterscheiden, das heisst ungleich 1:1 sein. In Fig. 3 sind 11 Einbaukörper gezeigt. Alle Einbaukörper sind miteinander durch Stegelemente 15, 16, 17, 18 verbunden.

Fig. 4 zeigt einen Schnitt durch den Einbaukörper 1 gemäss Fig. 2. Das erste Wandelement 2 sowie die Stegelemente 15, 16, 17, 18 sind geschnitten. Im Schnitt gemäss Fig. 4 ist das Umlenkelement 11 sichtbar. Das Umlenkelement 11 enthält die erste Öffnung 12, die in Fig. 4 linksseitig des ersten Wandelements 2 angeordnet ist, das heisst auf der Seite von dessen ersten Seitenwand 3. Auf der gegenüberliegenden Seite, also der zweiten Seitenwand 4, sind die zweite Öffnung 13 und die dritte Öffnung 14 angeordnet. Die erste Öffnung 12 ist in Bezug auf die zweite und dritte Öffnung 13, 14 versetzt angeordnet. Zwischen der zweiten und dritten Öffnung ist ein Teilelement 26 des Umlenkelements angeordnet. Das Fluid, welches auf das Teilelement 26 auftrifft, wird in Richtung der zweiten Öffnung 13 und der dritten Öffnung 14 umgelenkt. Umfangsseitig wird die zweite Öffnung 13 und die dritte Öffnung 14 durch das Mischergehäuse 210 begrenzt.

Fig. 5 zeigt einen Schnitt durch die zweiten und dritten Wandelemente 8, 9 des Einbaukörpers 1. Die Blickrichtung ist in Strömungsrichtung, sodass das erste Wandelement 102 des Einbaukörpers 101 sichtbar ist. An das erste Wandelement 102 des Einbaukörpers 101 schliesst das Umlenkelement 111 an. Das Umlenkelement 111 enthält eine erste Öffnung 112, welche auf der Seite der zweiten Seitenwand 104 angeordnet ist. Auf der Seite der ersten Seitenwand 103 sind eine zweite Öffnung 113 und eine dritte Öffnung 114 angeordnet. Die zweite Öffnung 113 und die dritte Öffnung 114 sind versetzt zur ersten Öffnung 112 angeordnet. Die ersten zweiten und dritten Öffnungen 112, 113, 114 sind derart angeordnet, dass gegenüberliegend zu jeder der Öffnung je ein Teilelement angeordnet ist, also gegenüberliegend zur ersten Öffnung 112 ein erstes Teilelement 126, gegenüberliegend zur zweiten Öffnung 113 ein zweites Teilelement 127 und gegenüberliegend zur dritten Öffnung ein drittes Teilelement 128.

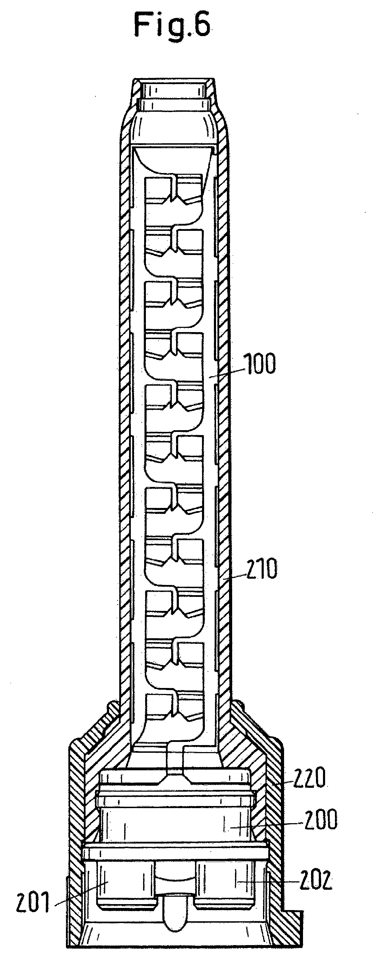

Fig. 6 einen Schnitt durch ein Einlassteil eines statischen Mischers und ein Mischelement gemäss Fig.3. Der statische Mischer umfasst ein Mischergehäuse 210, in welchem das Mischelement und das Einlasselement aufgenommen ist. Das Mischergehäuse ist in einem Verbindungselement 220 aufgenommen, welches zur Verbindung mit einer Kartusche dient.

Die Stegelemente 15, 16, 17, 18 halten alle Einbaukörper des Mischelements miteinander verbunden. Jedes der Stegelemente erhöht die Biegesteifigkeit des statischen Mischers. Des weiteren kann durch die Stegelemente verhindert werden, dass es im Betrieb des Mischers zum Bruch des Mischelements kommt, insbesondere wenn mindestens zwei Mischelemente auf gegenüberliegenden Seiten der ersten Wandelemente angeordnet sind. Des weiteren ist während der Herstellung des Einbaukörpers im Spritzgiessverfahren über das Stegelement gewährleistet, dass die Polymerschmelze vom ersten Einbaukörper 1 zu dem ersten und allen weiteren stromabwärts angeordneten Einbaukörpern 101 fliessen kann. Ohne die Stegelemente bestünde der Übergang vom Wandelement 8 bzw. 9 zu dem stromabwärts gelegenen Wandelement 102 nämlich ausschliesslich in der gemeinsamen Schnittfläche sowie einer allfälligen Verstärkung derselben, Das heisst, die Schnittfläche besteht in diesem Fall aus zwei Quadraten besteht, die eine Seitenlänge, die der Wandstärke 7 entspricht, aufweisen würden. Die gesamte Polymerschmelze für die stromabwärts gelegenen Einbaukörper müsste diese Drosselstellen passieren, was zu lokalen Druckspitzen im Werkzeug führen würde. Zudem würde sich in den Bereichen der Wandelemente, die im Einsatz nahe an dem rohrförmigen Gehäuse zu liegen kommen würden, eine lange Verweilzeit der Polymerschmelze ergeben, was zu Veränderungen der Polymerschmelze und unter Umständen zu einer Verschlechterung der physikalischen Eigenschaften und Inhomogenität führen würde, sodass im Stand der Technik nur durch die Verwendung einer treibmittelhaltigen Schmelze zum Erzeugen einer geschäumten Struktur ein derartiges Mischelement hergestellt werden kann.

Aus diesem Grund werden gemäss der Erfindung die Stegelemente zur Weiterleitung der Polymerschmelze im Herstellungsverfahren von einem Einbaukörper zu jedem der benachbarten Einbaukörper vorgesehen.

Der statische Mischer ist üblicherweise aus Kunststoff gefertigt, mittels welchem sich im Spritzgiessverfahren selbst vergleichsweise komplizierte Geometrien realisieren lassen. Insbesondere für statische Mischer umfassend eine Mehrzahl von Einbaukörpern weist die Gesamtheit der Einbaukörper 1, 101 eine Längenabmessung 24 auf und jede der Querschnittsflächen 23, 123 eine Wandstärke 7. Das Verhältnis von Längenabmessung 24 zu Wandstärke 7 beträgt mindestens 40, vorzugsweise mindestens 50, besonders bevorzugt mindestens 75. Für die bevorzugte Verwendung von statischen Mischern für kleine Mengen an Füllmasse ist die Wandstärke 7 kleiner als 3 mm, vorzugsweise kleiner als 2 mm, besonders bevorzugt kleiner als 1,5 mm. Die Gesamtheit der Einbaukörper 1,101 weist eine Längenabmessung 24 zwischen 5 und 500 mm, vorzugsweise zwischen 5 und 300 mm, bevorzugt zwischen 50 und 100 mm auf.

## Patentansprüche

1. Mischelement für einen statischen Mischer zum Einbau in ein rohrförmiges Mischergehäuse, wobei das Mischelement eine Längsachse (10) aufweist, entlang derer eine Mehrzahl von Einbaukörpern (1,101) hintereinander angeordnet sind, wobei ein erster Einbaukörper (1) ein erstes Wandelement (2) aufweist, welches sich in Richtung der Längsachse erstreckt und eine erste Seitenwand (3) und eine zweite Seitenwand (4) aufweist, die der ersten Seitenwand (3) gegenüberliegend angeordnet ist, wobei ein Umlenkelement (11) angrenzend an das erste Wandelement (2) angeordnet ist und das Umlenkelement (11) eine sich in Querrichtung zum ersten Wandelement (2) beidseitig des Wandelements (2) erstreckende Umlenkoberfläche aufweist, wobei eine erste Öffnung (12) in der Umlenkoberfläche an der Seite, die der ersten Seitenwand (3) des ersten Wandelements (2) zugewendet ist, vorgesehen ist, wobei angrenzend an die erste Öffnung (12) ein zweites und ein drittes Wandelement (8, 9) angeordnet sind, wobei die zweiten und dritten Wandelemente (8, 9) sich in Richtung der Längsachse (10) erstrecken und je eine Innenwand (81, 91) und eine Aussenwand (82, 92) aufweisen, welche sich im wesentlichen in Richtung der Längsachse (10) erstrecken und jede der Innenwände (81, 91) und Aussenwände (82, 92) einen Winkel zwischen 20° und 160° zu der ersten oder zweiten Seitenwand (3, 4) des ersten Wandelements (2) einschliessen, wobei die erste Öffnung (12) zwischen den Innenwänden (81, 91) der zweiten und dritten Wandelemente (8, 9) angeordnet ist und eine zweite Öffnung (13, 14) ausserhalb einer der Aussenwände (82, 92) des zweiten oder dritten Wandelements (8, 9) angeordnet ist, wobei die zweite Öffnung (13, 14) in der Umlenkoberfläche an der Seite, die der zweiten Seitenwand (4) des ersten Wandelements (2) zugewendet ist, vorgesehen ist, wobei an das zweite und dritte Wandelement (8, 9) ein erstes Wandelement (102) eines zweiten Einbaukörpers (101) anschliesst, **dadurch gekennzeichnet, dass** mehr als fünf Einbaukörper über ein gemeinsames Stegelement (15, 16, 17, 18) miteinander verbunden sind.

2. Mischelement nach Anspruch 1, wobei der zweite Einbaukörper (101) das erste Wandelement (102) aufweist, welches sich in Richtung der Längsachse (10) erstreckt und eine erste Seitenwand (103) und eine zweite Seitenwand (104) aufweist, die der ersten Seitenwand (103) gegenüberliegend angeordnet ist, wobei ein Umlenkelement (111) angrenzend an das erste Wandelement (102) angeordnet ist und das Umlenkelement (111) eine sich in Querrichtung zum Wandelement (102) beidseitig des Wandelements (102) erstreckende Umlenkoberfläche aufweist, wobei eine erste Öffnung (112) in der Umlenkoberfläche an der Seite, die der zweiten Seitenwand (104) des Wandelements (102) zugewendet ist, vorgesehen ist, wobei angrenzend an die erste Öffnung (112) ein zweites und ein drittes Wandelement (108, 109) angeordnet sind, wobei die zweiten und dritten Wandelemente (108, 109) sich in Richtung der Längsachse (10) erstrecken, und je eine Innenwand (181, 191) und eine Aussenwand (182, 192) aufweisen, welche sich im wesentlichen in Richtung der Längsachse (10) erstrecken und jede der Innenwände (181, 191) und Aussenwände (182, 192) einen Winkel zwischen 20° und 160° zu der ersten oder zweiten Seitenwand (103, 104) des ersten Wandelements (102) einschliessen, wobei die erste Öffnung (112) zwischen den Innenwänden (181, 191) der zweiten und dritten Wandelemente (108, 109) angeordnet ist und eine zweite Öffnung (113, 114) ausserhalb einer der Aussenwände (182, 192) des zweiten oder dritten Wandelements (108, 109) angeordnet ist, wobei die zweite Öffnung (113, 114) in der Umlenkoberfläche an der Seite, die der zweiten Seitenwand (104) des ersten Wandelements (102) zugewendet ist, vorgesehen ist, wobei der das erste Wandelement (102), das Umlenkelement (111) sowie das zweite und dritte Wandelement (108, 109) enthaltende zweite Einbaukörper (101) um die Längsachse (10) um einen Winkel von 10° bis zu und einschliesslich 180° in Bezug auf den ersten Einbaukörper (1) verdreht angeordnet ist.

3. Mischelement nach Anspruch 1 oder 2, wobei der zweite Einbaukörper (1) den gleichen Aufbau hat, wie der erste Einbaukörper (101) und/oder der erste Einbaukörper (1) um die Längsachse (10) um einem Winkel von 180° in Bezug auf den zweiten Einbaukörper (101) verdreht angeordnet ist.

4. Mischelement nach einem der vorhergehenden Ansprüche, wobei alle Einbaukörper des Mischelements mittels des Stegelements (15, 16, 17, 18) verbunden sind.

5. Mischelement nach einem der vorhergehenden Ansprüche, wobei das Stegelement (15, 16, 17, 18) am äusseren Umfang des Umlenkelements (11, 111) angeordnet ist.

6. Mischelement nach einem der vorhergehenden Ansprüche, wobei an jeder Seite des ersten Wandelements (2, 102) ein Stegelement (15, 16, 17, 18) vorgesehen ist.

7. Mischelement nach einem der vorhergehenden Ansprüche, wobei an jeder Seite des Wandelements (2, 102) je zwei Stegelemente (15, 16, 17, 18) vorgesehen sind.

8. Mischelement nach einem der vorhergehenden Ansprüche, wobei das Wandelement (2, 102) einen Winkel von 90 bis 130° mit der Umlenkoberfläche einschliesst.

9. Mischelement nach einem der vorhergehenden Ansprüche, wobei die Umlenkoberfläche eine zumindest teilweise in Richtung des strömenden Fluids gekrümmte Oberfläche zur Umlenkung der Fluidströmung in eine von der Längsachse (10) abweichende Richtung aufweist.

10. Mischelement nach einem der vorhergehenden Ansprüche 1 bis 8, wobei die Umlenkoberfläche eben ist.

11. Mischelement nach einem der vorhergehenden Ansprüche, wobei die Umlenkoberfläche sich in einem Winkel von 90° zum Wandelement erstreckt.

12. Mischelement nach einem der vorhergehenden Ansprüche, wobei die Umlenkoberfläche des ersten Einbaukörpers derart ausgestaltet ist, dass sie in Richtung der Längsachse die Öffnungen des zweiten Einbaukörpers verdeckt.

13. Mischelement nach einem der vorhergehenden Ansprüche, wobei die Oberfläche des Umlenkelements an der Seite, die der ersten Seitenwand des Wandelements zugewendet ist, zumindest teilweise in einer Querebene liegt, die in einem Winkel von 60° bis zu 90° zur Längsachse ausgerichtet ist.

14. Mischelement nach einem der vorhergehenden Ansprüche, wobei die Oberfläche des Umlenkelements an der Seite, die der zweiten Seitenwand des Wandelements zugewendet ist, in einer Querebene liegt, die in einem Winkel von 60° bis zu 90° zur Längsachse ausgerichtet ist.

15. Mischelement nach einem der vorhergehenden Ansprüche, wobei zwischen dem zweiten und dritten Wandelement (8,9) des ersten Einbaukörpers (1) und dem ersten Wandelement (102) des zweiten Einbaukörpers (101) ein Verstärkungselement an deren Verbindungsstelle vorgesehen ist.

16. Statischer Mischer, enthaltend ein Mischelement nach einem der vorhergehenden Ansprüche und ein Mischergehäuse, welches das Mischelement umgibt.

## Claims

1. A mixing element for a static mixer for installation into a tubular mixer housing, wherein the mixing element has a longitudinal axis (10) along which a plurality of installation bodies (1, 101) are arranged behind one another, wherein a first installation body (1) has a first wall element (2) which extends in the direction of the longitudinal axis and has a first side wall (3) and a second side wall (4) which is arranged opposite the first side wall (3), wherein a deflection element (11) is arranged adjacent to the first wall element (2) and the deflection element (11) has a deflection surface extending in the transverse direction to the first wall element (2) at both sides of the wall element (2), wherein a first opening (12) is provided in the deflection surface at the side which faces the first side wall (3) of the first wall element (2), wherein a second and third wall element (8, 9) are arranged adjacent to the first opening (12), wherein the second and third wall elements (8, 9) extend in the direction of the longitudinal axis (10) and each have an inner wall (81, 91) and an outer wall (82, 92) which extend substantially in the direction of the longitudinal axis (10) and each of the inner walls (81, 91) and outer walls (82, 92) include an angle between 20° and 160° to the first or second side walls (3, 4) of the first wall element (2), wherein the first opening (12) is arranged between the inner walls (81, 91) of the second and third wall elements (8, 9) and a second opening (13, 14) is arranged outside one of the outer walls (82, 92) of the second or third wall elements (8, 9), wherein the second opening (13, 14) is provided in the deflection surface at the side which faces the second side wall (4) of the first wall element (2), wherein a first wall element (102) of a second installation body (101) adjoins the second and third wall elements (8, 9), **characterized in that** more than five installation bodies are connected to one another via a common bar element (15, 16, 17, 18).

2. A mixing element in accordance with claim 1, wherein the second installation body (101) has the first wall element (102) which extends in the direction of the longitudinal axis (10) and has a first side wall (103) and a second side wall (104) which is arranged opposite the first side wall (103), wherein a deflection element (111) is arranged adjacent to the first wall element (102) and the deflection element (111) has a deflection surface extending in the transverse direction to the wall element (102) at both sides of the wall element (102), wherein a first opening (112) is provided in the deflection surface at the side which faces the second side wall (104) of the wall element (102), wherein a second and a third wall element (108, 109) are arranged adjacent to the first opening (112), wherein the second and third wall elements (108, 109) extend in the direction of the longitudinal axis (10) and each have an inner wall (181, 191) and an outer wall (182, 192) which extend substantially in the direction of the longitudinal axis (10) and each of the inner walls (181, 191) and outer walls (182, 192) include an angle between 20° and 160° to the first or second side wall (103, 104) of the first wall element (102), wherein the first opening (112) is arranged between the inner walls (181, 191) of the second and third wall elements (108, 109) and a second opening (113, 114) is arranged outside one of the outer walls (182, 192) of the second or third wall elements (108, 109), wherein the second opening (113, 114) is provided in the deflection surface at the side which faces the second side wall (104) of the first wall element (102), wherein the second installation body (101) containing the first wall element (102), the deflection element (111) and the second and third wall elements (108, 109) is arranged rotated about the longitudinal axis (10) by an angle of 10° up to and including 180° with respect to the first installation body (1).

3. A mixing element in accordance with claim 1 or claim 2, wherein the second installation body (1) has the same structure as the first installation body (101) and/or the first installation body (1) is arranged rotated about the longitudinal axis (10) by an angle of 180° with respect to the second installation body (101).

4. A mixing element in accordance with any one of the preceding claims, wherein all installation bodies of the mixing element are connected by means of the bar element (15, 16, 17, 18).

5. A mixing element in accordance with any one of the preceding claims, wherein the bar element (15, 16, 17, 18) is arranged at the outer periphery of the deflection element (11, 111).

6. A mixing element in accordance with any one of the preceding claims, wherein a bar element (15, 16, 17, 18) is provided at each side of the first wall element (2, 102).

7. A mixing element in accordance with any one of the preceding claims, wherein two respective bar elements (15, 16, 17, 18) are provided at each side of the wall element (2, 102).

8. A mixing element in accordance with any one of the preceding claims, wherein the wall element (2, 102) includes an angle of 90° to 130° with the deflection surface.

9. A mixing element in accordance with any one of the preceding claims, wherein the deflection surface has a surface curved at least partly in the direction of the flowing fluid for deflecting the fluid flow in a direction differing from the longitudinal axis (10).

10. A mixing element in accordance with any one of the preceding claims 1 to 8, wherein the deflection surface is planar.

11. A mixing element in accordance with any one of the preceding claims, wherein the deflection surface extends at an angle of 90° to the wall element.

12. A mixing element in accordance with any one of the preceding claims, wherein the deflection surface of the first installation body is designed such that it covers the openings of the second installation body in the direction of the longitudinal axis.

13. A mixing element in accordance with any one of the preceding claims, wherein the surface of the deflection element at the side which faces the first side wall of the wall element lies in a transverse plane which is aligned at an angle of 60° to 90° to the longitudinal axis.

14. A mixing element in accordance with any one of the preceding claims, wherein the surface of the deflection element at the side which faces the second side wall of the wall element lies in a transverse plane which is aligned at an angle of 60° to 90° to the longitudinal axis.

15. A mixing element in accordance with any one of the preceding claims, wherein a reinforcement element is provided between the second and third wall elements (8, 9) of the first installation body (1) and the first wall element (102) of the second installation body (101) at their connection point.

16. A static mixer containing a mixing element in accordance with any one of the preceding claims and a mixer housing which surrounds the mixing element.

## Revendications

1. Élément mélangeur pour un mélangeur statique destiné à être intégré dans un boîtier de mélangeur de forme tubulaire, dans lequel l'élément mélangeur présente un axe longitudinal (10), le long duquel sont agencés une pluralité de corps d'intégration (1, 101) les uns derrière les autres, dans lesquels un premier corps d'intégration (1) comprend un premier élément de paroi (2) qui s'étend en direction de l'axe longitudinal, et une première paroi latérale (3) et une seconde paroi latérale (4), qui est agencée à l'opposé de la première paroi latérale (3), dans lequel un élément de déflexion (11) est agencé adjacent au premier élément de paroi (2) et l'élément de déflexion (11) présente une surface de déflexion qui s'étend en direction transversale par rapport à l'élément de paroi (2) des deux côtés de l'élément de paroi (2), dans lequel une première ouverture (12) est prévue dans la surface de déflexion sur le côté qui est tourné vers la première paroi latérale (3) du premier élément de paroi (2), dans lequel un second et un troisième élément de paroi (8, 9) sont agencés adjacents à la première ouverture (12), de sorte que le second et le troisième élément de paroi (8, 9) s'étendent en direction de l'axe longitudinal (10) et présentent chacun une paroi intérieure (81, 91) et une paroi extérieure (82, 92) qui s'étendent sensiblement en direction de l'axe longitudinal (10), et chacune des parois intérieures (81, 91) et des parois extérieures (82, 92) forme un angle entre 20° et 160° par rapport à la première ou à la seconde paroi latérale (3, 4) du premier élément de paroi (2), dans lequel la première ouverture (12) est agencée entre les parois intérieures (81, 91) du second et du troisième élément de paroi (8, 9), et une seconde ouverture (13, 14) est agencée à l'extérieur de l'une des parois extérieures (82, 92) du second ou du troisième élément de paroi (8, 9), dans lequel la seconde ouverture (13, 14) est prévue dans la surface de déflexion du côté qui est tourné vers la seconde paroi latérale (4) du premier élément de paroi (2), et dans lequel un premier élément de paroi (102) d'un second corps d'intégration (101) se raccorde au second et au troisième élément de paroi (8, 9),
**caractérisé en ce que** plus de cinq corps d'intégration sont reliés les uns avec les autres via un élément en barrette commun (15, 16, 17, 18).

2. Élément mélangeur selon la revendication 1, dans lequel le second corps d'intégration (101) comporte le premier élément de paroi (102) qui s'étend en direction de l'axe longitudinal (10), et une première paroi latérale (103) et une seconde paroi latérale (104) qui est agencée à l'opposé de la première paroi latérale (103), dans lequel un élément de déflexion (111) est agencé adjacent au premier élément de paroi (102), et l'élément de déflexion (111) présente une surface de déflexion qui s'étend en direction transversale par rapport à l'élément de paroi (102) des deux côtés de l'élément de paroi (102), dans lequel une première ouverture (112) est prévue dans la surface de déflexion sur le côté qui est tourné vers la seconde paroi latérale (104) de l'élément de paroi (102), dans lequel un second et un troisième élément de paroi (108, 109) sont agencés adjacents à la première ouverture (112), dans lequel le second et le troisième élément de paroi (108, 109) s'étendent en direction de l'axe longitudinal (10) et comportent chacun une paroi intérieure (181, 191) et une paroi extérieure (182, 192), qui s'étendent sensiblement en direction de l'axe longitudinal (10), et chacune des parois intérieures (181, 191) et des parois extérieures (182, 192) définit un angle entre 20° et 160° par rapport à la première ou à la seconde paroi latérale (103, 104) du premier élément de paroi (102), dans lequel la première ouverture (112) est agencée entre les parois intérieures (181, 191) du second et du troisième élément de paroi (108, 109), et une seconde ouverture (113, 114) est agencée à l'extérieur de l'une des parois extérieures (182, 192) du second ou du troisième élément de paroi (108, 109), dans lequel la seconde ouverture (113, 114) est prévue dans la surface de déflexion sur le côté qui est tourné vers la seconde paroi latérale (104) du premier élément de paroi (102), et dans lequel le second corps d'intégration (101) qui contient le premier élément de paroi (102), l'élément de déflexion (111), ainsi que le second et le troisième élément de paroi (108, 109) est agencé de manière tournée autour de l'axe longitudinal (10) par rapport au premier corps d'intégration (1), d'un angle allant de 10° jusqu'à 180° y compris.

3. Élément mélangeur selon la revendication 1 ou 2, dans lequel le second corps d'intégration (1) a la même structure que le premier corps d'intégration (101), et/ou le premier corps d'intégration (1) est agencé de manière tournée autour de l'axe longitudinal (10) par rapport au second corps d'intégration (101), d'un angle de 180°.

4. Élément mélangeur selon l'une des revendications précédentes, dans lequel tous les corps d'intégration de l'élément mélangeur sont reliés au moyen de l'élément en barrette (15, 16, 17, 18).

5. Élément mélangeur selon l'une des revendications précédentes, dans lequel l'élément en barrette (15, 16, 17, 18) est agencé à la périphérie extérieure de l'élément de déflexion (11, 111).

6. Élément mélangeur selon l'une des revendications précédentes, dans lequel un élément en barrette (15, 16, 17, 18) est prévu sur chaque côté du premier élément de paroi (2, 102).

7. Élément mélangeur selon l'une des revendications précédentes, dans lequel deux éléments en barrette (15, 16, 17, 18) respectifs sont prévus sur chaque côté de l'élément de paroi (2, 102).

8. Élément mélangeur selon l'une des revendications précédentes, dans lequel l'élément de paroi (2, 102) définit avec la surface de déflexion un angle de 90° à 130°.

9. Élément mélangeur selon l'une des revendications précédentes, dans lequel la surface de déflexion présente une surface incurvée au moins partiellement en direction du fluide en écoulement pour défléchir l'écoulement du fluide dans une direction différente de l'axe longitudinal (10).

10. Élément mélangeur selon l'une des revendications précédentes 1 à 8, dans lequel la surface de déflexion est plane.

11. Élément mélangeur selon l'une des revendications précédentes, dans lequel la surface de déflexion s'étend sous un angle de 90° par rapport à l'élément de paroi.

12. Élément mélangeur selon l'une des revendications précédentes, dans lequel la surface de déflexion du premier corps d'intégration est conçue de telle façon qu'elle recouvre les ouvertures du second corps d'intégration en direction de l'axe longitudinal.

13. Élément mélangeur selon l'une des revendications précédentes, dans lequel, sur le côté qui est tourné vers la première paroi latérale de l'élément de paroi, la surface de l'élément de déflexion est située au moins partiellement dans un plan transversal qui est orienté sous un angle de 60° à 90° par rapport à l'axe longitudinal.

14. Élément mélangeur selon l'une des revendications précédentes, dans lequel, sur le côté qui est tourné vers la seconde paroi latérale de l'élément de paroi, la surface de l'élément de déflexion est située dans un plan transversal qui est orienté sous un angle de 60° à 90° par rapport à l'axe longitudinal.

15. Élément mélangeur selon l'une des revendications précédentes, dans lequel un élément de renforcement est prévu entre le second et le troisième élément de paroi (8, 9) du premier corps d'intégration (1) et le premier élément de paroi (102) du second corps d'intégration (101), au niveau de leur emplacement de liaison.

16. Mélangeur statique qui comprend un élément mélangeur selon l'une des revendications précédentes et un boîtier de mélangeur qui entoure l'élément mélangeur.
